(19) Europäisches Patentamt / European Patent Office / Office européen des brevets

(11) **EP 4 092 003 B1**

(12) **EUROPEAN PATENT SPECIFICATION**

(45) Date of publication and mention
of the grant of the patent:
**27.08.2025 Bulletin 2025/35**

(21) Application number: **20914144.9**

(22) Date of filing: **18.12.2020**

(51) International Patent Classification (IPC):
*C03C 27/12* (2006.01)   *C08F 8/28* (2006.01)
*C08K 3/24* (2006.01)   *C08L 29/14* (2006.01)
*B32B 7/12* (2006.01)   *B32B 17/10* (2006.01)
*C08J 5/18* (2006.01)   *C08F 216/06* (2006.01)
*C08F 216/38* (2006.01)   *C08F 210/02* (2006.01)

(52) Cooperative Patent Classification (CPC):
(C-Sets available)
**B32B 17/10036; B32B 7/12; B32B 17/10688;
B32B 17/10761; B32B 27/18; B32B 27/30;
C08F 8/28; C08J 5/18; C08K 3/24;** B32B 2307/412;
C08F 216/06; C08J 2329/14                    (Cont.)

(86) International application number:
**PCT/JP2020/047379**

(87) International publication number:
**WO 2021/145137 (22.07.2021 Gazette 2021/29)**

(54) **RESIN COMPOSITION, RESIN SHEET, AND LAMINATED GLASS**

HARZZUSAMMENSETZUNG, HARZFOLIE UND VERBUNDGLAS

COMPOSITION DE RÉSINE, FEUILLE DE RÉSINE ET VERRE FEUILLETÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.01.2020 JP 2020004421**

(43) Date of publication of application:
**23.11.2022 Bulletin 2022/47**

(73) Proprietor: **Kuraray Co., Ltd.
Kurashiki-shi, Okayama 710-0801 (JP)**

(72) Inventors:
• **NIIMURA, Takuro
Tsukuba-shi, Ibaraki 305-0841 (JP)**
• **TAKASUGI, Akio
Tsukuba-shi, Ibaraki 305-0841 (JP)**
• **NAKAHARA, Atsuhiro
Tsukuba-shi, Ibaraki 305-0841 (JP)**
• **ASANUMA, Yoshiaki
Kurashiki-shi, Okayama 713-8550 (JP)**

(74) Representative: **Müller-Boré & Partner
Patentanwälte PartG mbB
Friedenheimer Brücke 21
80639 München (DE)**

(56) References cited:
WO-A1-2008/096403   JP-A- 2003 224 385
JP-A- 2004 068 013   JP-A- 2011 057 737
JP-A- 2013 237 727   JP-A- 2013 237 727

EP 4 092 003 B1

(52) Cooperative Patent Classification (CPC): (Cont.)

C-Sets
**C08F 8/28, C08F 210/02;**
**C08K 3/24, C08L 29/14;**
C08F 216/06, C08F 210/02

## Description

[Technical Field]

The present invention relates to a resin composition, a resin sheet comprising the resin composition, and a laminated glass comprising the resin sheet as an intermediate film.

[Background Art]

Even when laminated glasses are broken due to an external impact, they are safe since only a few pieces of glass scatter. Therefore, laminated glasses are widely used as windshields, side window glasses and rear window glasses of vehicles such as automobiles, as well as window glasses of airplanes or buildings.

For intermediate films for laminated glass that are used in such laminated glasses, generally, the moldability, the penetration resistance and the adhesion to glass are adjusted by using a large amount of a vinyl butyral resin and incorporating a liquid plasticizer and an adhesion modifier. The incorporation of a liquid plasticizer softens the vinyl butyral resin, causing a marked reduction in the heat resistance. In addition, when the amount of the liquid plasticizer is reduced or no liquid plasticizer is incorporated, although the heat resistance is improved, the moldability is deteriorated and it is thus necessary to raise the molding temperature. Consequently, the resulting plate-form molded body exhibits notable progress of coloration.

Patent Literature 1 discloses a laminated glass obtained by interposing a thermosetting resin, which is prepared by incorporating an organic peroxide and a silane coupling agent into an ionomer resin in which ethylene-methacrylic acid copolymer molecules are bound via metal ions, between glass plates, integrating the thermosetting resin and the glass plates, and then heat-curing the resulting resin layer (claim 1). Patent Literature 1 discloses that this laminated glass has improved impact resistance and penetration resistance as compared with a conventional laminated glass in which a polyvinyl butyral-based resin is used as an intermediate layer, and is excellent in impact resistance, penetration resistance, workability and transparency ([0015]).

Patent Literatures 2 and 3 disclose the use of a vinyl acetal-based polymer modified with an $\alpha$-olefin for an intermediate film of a laminated glass.

Patent Literature 4 discloses a modified polyvinyl acetal resin which contains 17 to 30 mol% of vinyl alcohol units, 40 to 80 mol% of acetal units, 0.1 to 25 mol% of vinyl acetate units, 0.5 to 20 mol% of ethylene units, and 0.1 to 15 mol% of polyvinyl ester units and/or acrylamide units. Patent Literature 4 discloses that this resin exhibits excellent adhesion and thread breakage, and can be utilized as a binder resin for laminated electronic components.

Patent Literature 5 discloses a polyvinyl acetal resin that comprises between 10 and 110 ppm of Na+ and films thereof that are improved in transparency and moisture resistance.

[Citation List]

[Patent Literature]

[Patent Literature 1] JP H9-30846 A
[Patent Literature 2] JP S63-79741 A
[Patent Literature 3] JP 2004-68013 A
[Patent Literature 4] JP 2012-107201 A
[Patent Literature JP 2013-237727 A

[Summary of Invention]

[Technical Problem]

However, the ionomer resin disclosed in Patent Literature 1 has a problem in that it is likely to cause whitening or defective adhesion unless the temperature condition during molding is strictly controlled, and it is likely to cause whitening particularly when the cooling rate after melt molding is reduced. For example, when a laminated glass in which a plate-form molded body of the ionomer resin is interposed is cooled, whitening occurs in the central part where the cooling rate is low, resulting in a reduction in transparency. In this manner, a laminated glass produced using the ionomer resin requires strict management of the production conditions, has a high production cost, and is thus difficult to mass-produce industrially.

Further, in Patent Literatures 2 and 3, the above-described problems, such as the need for using a large amount of a plasticizer, are neither considered nor improved.

Moreover, Patent Literature 4 discloses that the modified vinyl acetal resin disclosed therein can be produced by performing an acetalization reaction with an acid and subsequently neutralizing the reaction product with an alkali. However, composition and a metal salt content that are suitable for realizing high transparency are not explicitly stated.

In view of the above, an object of the present invention is to provide a resin composition which has transparency, heat resistance, moldability and water resistance in a well-balanced manner, and is particularly excellent in transparency.

Another object of the present invention is to provide an intermediate film for a laminated glass, which is excellent in transparency, heat resistance, moldability and water resistance.

[Solution to Problem]

The present inventors intensively studied to solve the above-described problems and consequently discovered that the problems can be solved by a resin composition containing, at a specific ratio, a modified vinyl acetal resin, which has ethylene unit content, vinyl alcohol unit content and an acetalization degree in specific ranges, and an alkali metal salt and/or an alkaline earth metal salt of a strong acid, thereby completing the present invention.

That is, the present invention provides a resin composition, comprising:

a modified vinyl acetal resin which comprises 20 to 80 mol% of ethylene units and 4 to 76 mol% of vinyl alcohol units based on all monomer units constituting the resin, and has an acetalization degree of 5 to 80 mol%; and
an alkali metal salt and/or an alkaline earth metal salt of a strong acid,
wherein the total content of the alkali metal salt and/or the alkaline earth metal salt of the strong acid is 0.0005 to 0.06 part by mass with respect to 100 parts by mass of the modified vinyl acetal resin and the alkali metal salt and/or the alkaline earth metal salt of a strong acid is selected from sodium chloride, sodium nitrate, sodium sulfate, potassium chloride, potassium nitrate, potassium sulfate, magnesium chloride, magnesium nitrate, magnesium sulfate, calcium chloride, calcium nitrate, calcium sulfate, and a combination of two or more thereof.

The resin composition preferably comprises the modified vinyl acetal resin in an amount of 80% by mass or more.

The content of a plasticizer is preferably an amount of 1 part by mass or less with respect to 100 parts by mass of the modified vinyl acetal resin.

The invention also provides a resin sheet, comprising the resin composition and having a thickness of 0.10 to 3.0 mm, an

intermediate film for a laminated glass, comprising the resin sheet and a laminated glass, comprising:

two glass plates; and
the intermediate film for a laminated glass, which is arranged between the two glass plates.

[Effect of Invention]

The resin composition of the present invention has transparency, heat resistance, moldability and water resistance in a well-balanced manner. In addition, the resin composition of the present invention is particularly excellent in transparency.

According to the present invention, an intermediate film for a laminated glass, which has excellent transparency, can be provided.

[Brief Description of Drawing]

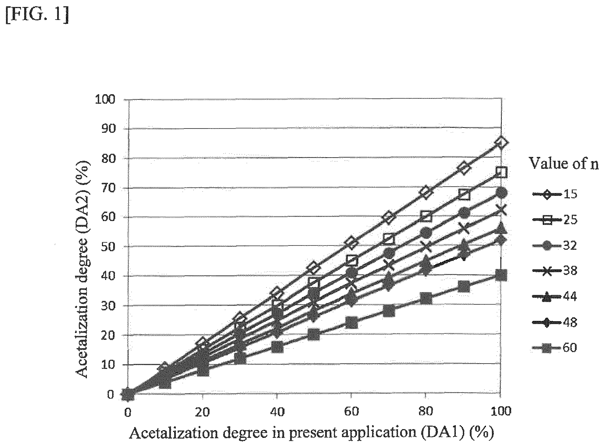

[FIG. 1] FIG. 1 is a graph showing the relationship between an acetalization degree (DA1) and an acetalization degree (DA2) in the present invention.

[Description of Embodiments]

Preferred embodiments of the present invention will now be described.

<Resin Composition>

The resin composition of the present invention comprises a modified vinyl acetal resin and an alkali metal salt and/or an alkaline earth metal salt of a strong acid. A total content of the alkali metal salt and/or the alkaline earth metal salt of the strong acid is 0.0005 to 0.06 part by mass with respect to 100 parts by mass of the modified vinyl acetal resin.

EP 4 092 003 B1

[Alkali Metal Salt and/or Alkaline Earth Metal Salt of Strong Acid]

The resin composition of the present invention comprises an alkali metal salt and/or an alkaline earth metal salt of a strong acid (hereinafter, also simply referred to as "metal salt"), and a total content thereof is 0.0005 to 0.06 part by mass with respect to 100 parts by mass of the modified vinyl acetal resin. The present inventors discovered that, when such a metal salt is incorporated into a resin composition at a ratio of 0.0005 to 0.06 part by mass with respect to 100 parts by mass of a modified vinyl acetal resin, the resulting resin composition has transparency, heat resistance, moldability and water resistance in a well-balanced manner, and is particularly excellent in transparency.

Meanwhile, when the total content of the metal salt is outside the above-described range, the resin composition cannot have transparency, heat resistance, moldability and water resistance in a well-balanced manner and, particularly, the transparency tends to be reduced. When the total content of the metal salt is less than 0.0005 part by mass with respect to 100 parts by mass of the modified vinyl acetal resin, since the crystallinity of the resin composition is increased, the transparency is likely to be deteriorated and, particularly, the transparency in a state where crystallization of the resin composition has been facilitated by slow-cooling (transparency after slow-cooling) is likely to be reduced. When the above-described total content is more than 0.06 part by mass, the water resistance is likely to be deteriorated, and the transparency of the resin composition after water absorption is likely to be reduced.

From the viewpoint of ease of improving the transparency, particularly the transparency after slow-cooling, the total content of the metal salt is 0.0005 part by mass or more, preferably 0.001 part by mass or more, more preferably 0.002 part by mass or more, still more preferably 0.01 part by mass or more, particularly preferably 0.02 part by mass or more, with respect to 100 parts by mass of the modified vinyl acetal resin. Further, from the viewpoint of ease of improving the water resistance and thus the transparency after water absorption, the total content of the metal salt is 0.06 part by mass or less, preferably 0.05 part by mass or less, more preferably 0.04 part by mass or less.

The content of the alkali metal salt and/or the alkaline earth metal salt of the strong acid in the resin composition of the present invention can be determined by the following procedure.

After a pre-treatment is performed using a microwave digester, the content of the alkali metal or the alkaline earth metal in the resin composition is measured by high-frequency inductively-coupled plasma emission spectrometry. Subsequently, the content of the metal salt in the resin composition can be determined from the thus measured metal content and the atomic weight or the molecular weight of anion species paired with metal cations. The details of this procedure will be described below in the section of the Examples.

A method of incorporating the metal salt into the resin composition is not particularly limited. For example, the metal salt can be incorporated by producing the modified vinyl acetal resin contained in the resin composition by the below-described method, and generating the metal salt by neutralization in this production step.

A method of adjusting the content of the metal salt in the resin composition is also not particularly limited. The content of the metal salt can be adjusted in the step of washing the modified vinyl acetal resin after neutralization, for example, by the following procedure.

First, the neutralized modified vinyl acetal resin is dissolved in methanol, and the resulting methanol solution is added dropwise to ion-exchanged water to precipitate the resin. The thus precipitated resin is filtered and then washed with water. The amount of the metal salt incorporated into the modified vinyl acetal resin can be adjusted to be in a specific range by changing the number, time and/or temperature of this precipitation and water-washing operation.

The resin composition of the present invention contains, in addition to a modified vinyl acetal resin, an alkali metal salt and/or an alkaline earth metal salt of an strong acid. The alkali metal salt and/or alkaline earth metal salt of a strong acid is selected from sodium chloride, sodium nitrate, sodium sulfate, potassium chloride, potassium nitrate, potassium sulfate, magnesium chloride, magnesium nitrate, magnesium sulfate, calcium chloride, calcium nitrate, and calcium sulfate. These metal salts may be used singly, or in combination of two or more thereof. By incorporating such an alkali metal salt and/or alkaline earth metal salt of a strong acid into a resin composition, a resin composition which not only has transparency, heat resistance, moldability and water resistance in a well-balanced manner, but also exhibits excellent adhesion with glass, is more easily to be obtained.

[Modified Vinyl Acetal Resin]

The modified vinyl acetal resin contained in the resin composition of the present invention contains 20 to 80 mol% of ethylene units and 4 to 76 mol% of vinyl alcohol units based on all monomer units constituting the resin, and has an acetalization degree of 5 to 80 mol%. It is noted here that, in the present invention, the term "modified vinyl acetal resin" means an acetalization product of an ethylene-vinyl alcohol copolymer that is obtained by acetalization of the ethylene-vinyl alcohol copolymer.

The content of the ethylene units is 20 to 80 mol%, preferably in the following order: 23 mol% or more, 26 mol% or more, 29 mol% or more and 32 mol% or more, and it is more preferably 35 mol% or more, based on all monomer units constituting the resin. When the ratio of the ethylene units is equal to or higher than the above-described lower limit, the impact resistance of the modified vinyl acetal resin is more easily to be improved. On the other hand, when the ratio of the ethylene units is lower than 20 mol%, the impact resistance of the modified vinyl acetal resin is likely to be reduced. The content of the ethylene units is also preferably in the following order: 74 mol% or less, 68 mol% or less, 62 mol% or less and 56 mol% or less, and it is more preferably 50 mol% or less, still more preferably 45 mol% or less. When the ratio of the ethylene units is equal to or lower than the above-described upper limit, the heat resistance is more easily to be improved. On the other hand, when the ratio of the ethylene units is higher than 80 mol%, the heat resistance is likely to be reduced.

The content of the vinyl alcohol units is 4 to 76 mol%, preferably in the following order: 5 mol% or more, 8 mol% or more, 12 mol% or more and 15 mol% or more, and it is more preferably 20 mol% or more, still more preferably 30 mol% or more, based on all monomer units constituting the resin. When the ratio of the vinyl alcohol units is equal to or higher than the above-described lower limit, the glass adhesion of the modified vinyl acetal resin is more easily to be improved. On the other hand, when the ratio of the vinyl alcohol units is lower than 4 mol%, the glass adhesion of the modified vinyl acetal resin is likely to be deteriorated. The content of the vinyl alcohol units is also preferably in the following order: 75 mol% or less, 73 mol% or less, 71 mol% or less and 69 mol% or less, and it is more preferably 67 mol% or less. When the ratio of the vinyl alcohol units is equal to or lower than the above-described upper limit, the transparency is more easily to be improved. On the other hand, when the ratio of the vinyl alcohol units is higher than 76 mol%, the transparency is likely to be deteriorated, although the glass adhesion is improved.

The modified vinyl acetal resin contains acetalized vinyl alcohol units (hereinafter, also referred to as "acetal units") in addition to the above-described ethylene units and vinyl alcohol units. It is noted here that an amount expressed in mol% based on all monomer units constituting the resin constituting the modified vinyl acetal resin contained in the resin composition of the present invention can be calculated by converting 1 mole of acetal units into 2 moles of vinyl alcohol units. For example, in a modified vinyl acetal resin composed of 44.0 moles of ethylene units, 44.8 moles of vinyl alcohol units, and 5.6 moles of acetal units, the content of ethylene units and that of vinyl alcohol units are 44.0 mol% and 44.8 mol%, respectively, and the acetalization degree is 20.0 mol%.

The modified vinyl acetal resin contained in the resin composition of the present invention has an acetalization degree of 5 to 80 mol%. The acetalization degree is preferably in the following order: 6 mol% or higher, 7 mol% or higher, 8 mol% or higher and 9 mol% or higher, and it is more preferably 10 mol% or higher. When the acetalization degree is equal to or higher than the above-described lower limit, the crystallinity of the modified vinyl acetal resin is more easily to be reduced, so that the transparency is more easily to be improved. On the other hand, when the acetalization degree is lower than 5 mol%, since the crystallinity of the modified vinyl acetal resin is likely to be increased, the transparency is likely to be deteriorated. The acetalization degree is also preferably in the following order: 70 mol% or lower, 60 mol% or lower, 50 mol% or lower, and 40 mol% or lower, and it is more preferably 35 mol% or lower, still more preferably 30 mol% or lower. When the acetalization degree is equal to or lower than the above-described upper limit, the heat resistance and the glass adhesion are more easily to be improved. On the other hand, when the acetalization degree is higher than 80 mol%, the heat resistance and the glass adhesion are likely to be deteriorated.

Generally, the acetalization degree of a modified vinyl acetal resin has two definitions. In one definition, the acetalization degree is a ratio of acetalized vinyl alcohol units in structural units other than ethylene units. In other words, the acetalization degree refers to, for example, a ratio of acetalized vinyl alcohol units with respect to a sum of acetalized vinyl alcohol units, unacetalized vinyl alcohol units and vinyl acetate units. This acetalization degree can be calculated by the following equation: Acetalization degree (mol%) = $\{k/(k + l + m)\} \times 100$, wherein l, m and k represent a molar ratio of unacetalized vinyl alcohol units, a molar ratio of vinyl acetate units and a molar ratio of acetalized vinyl alcohol units, respectively. In another definition, the acetalization degree is a ratio of acetalized vinyl alcohol units in all monomer units including ethylene units. In other words, the acetalization degree refers to, for example, a ratio of acetalized vinyl alcohol units with respect to a sum of ethylene units, acetalized vinyl alcohol units, unacetalized vinyl alcohol units and vinyl acetate units. This acetalization degree can be calculated by the following equation: Acetalization degree (mol%) = $\{k/(k + l + m + n)\} \times 100$, wherein l, m, k and n represent a molar ratio of unacetalized vinyl alcohol units, a molar ratio of vinyl acetate units, a molar ratio of acetalized vinyl alcohol units, and a molar ratio of ethylene units, respectively.

The acetalization degree in the present invention is defined by the former of the above-described definitions, which is a ratio of acetalized vinyl alcohol units in structural units other than ethylene units. Meanwhile, the acetalization degree of the latter is defined by the latter of the above-described definitions, which is a ratio of acetalized vinyl alcohol units in all monomer units including ethylene units. In other words, using a molar ratio (n) of ethylene units, the relationship between an acetalization degree in the present application (DA1) and an acetalization degree (DA2) can be hereinafter represented by DA2 = $\{(100 - n)/100\} \times$ DA1, and this relationship is depicted as in FIG. 1 when, for example, n = 15, 25, 32, 38, 44, 48 or 60.

The acetalization degree of the modified vinyl acetal resin contained in the resin composition of the present invention can be determined by the following procedure. First, the modified vinyl acetal resin is dissolved in ethanol, and a 2N hydroxylamine hydrochloride solution and hydrochloric acid are added thereto. The resultant is stirred for 4 hours in a water bath equipped with a condenser, cooled, and then neutralized with an addition of aqueous ammonia, after which methanol is added to cause precipitation, and the resulting precipitate is washed and dried to obtain an ethylene-vinyl alcohol copolymer. Subsequently, the thus obtained ethylene-vinyl alcohol copolymer is dissolved in DMSO at 120°C, and the resultant is allowed to cool under room temperature, after which *N,N*-dimethyl-4-aminopyridine and acetic anhydride are added thereto and allowed to react with stirring for 1 hour, followed by precipitation with ion-exchanged water and acetone, washing, and then drying, whereby an ethylene-vinyl acetate copolymer is obtained.

The thus obtained ethylene-vinyl acetate copolymer is dissolved in $DMSO\text{-}d_6$ (dimethyl sulfoxide) and, based on a spectrum obtained by performing a measurement using a 400-MHz 1H-NMR analyzer with 256 integrations, the molar ratio (n) of ethylene units in the ethylene-vinyl alcohol copolymer can be calculated from the intensity ratio of methine protons derived from ethylene units and vinyl acetate units (peak at 1.1 to 1.9 ppm) and terminal methyl protons derived from vinyl acetate units (peak at 2.0 ppm).

The molar ratio (1) of vinyl alcohol units, the molar ratio (m) of vinyl acetate units and the molar ratio (k) of acetalized vinyl alcohol units, all of which molar ratios are with respect to all monomer units constituting the modified vinyl acetal resin, can be calculated from the intensity ratio of methine protons derived from ethylene units, vinyl alcohol units and vinyl ester units (peak at 1.0 to 1.8 ppm) and terminal methyl protons derived from acetal units (peak at 0.8 to 1.0 ppm) as well as the molar ratio (n) of ethylene units in the ethylene-vinyl alcohol copolymer, based on a spectrum obtained by dissolving the modified vinyl acetal resin in $DMSO\text{-}d_6$ (dimethyl sulfoxide) and performing a measurement using a 400-MHz 1H-NMR analyzer with 256 integrations.

The acetalization degree of the modified vinyl acetal resin can be calculated from the above-determined molar ratio (1) of vinyl alcohol units, molar ratio (m) of vinyl acetate units and molar ratio (k) of acetalized vinyl alcohol units, using the following equation:

$$\text{Acetalization degree (mol\%)} = \{k/(k + l + m)\} \times 100.$$

As another method, the ethylene-vinyl alcohol copolymer prior to acetalization reaction is dissolved in DMSO at 120°C, and the resultant is allowed to cool under room temperature, after which *N,N*-dimethyl-4-aminopyridine and acetic anhydride are added thereto and allowed to react with stirring for 1 hour, followed by precipitation with ion-exchanged water and acetone, washing, and then drying, whereby an ethylene-vinyl acetate copolymer is obtained.

The thus obtained ethylene-vinyl acetate copolymer is dissolved in $DMSO\text{-}d_6$ (dimethyl sulfoxide) and, based on a spectrum obtained by performing a measurement using a 400-MHz 1H-NMR analyzer with 256 integrations, the molar ratio (n) of ethylene units in the ethylene-vinyl alcohol copolymer can be calculated from the intensity ratio of methine protons derived from ethylene units and vinyl acetate units (peak at 1.1 to 1.9 ppm) and terminal methyl protons derived from vinyl acetate units (peak at 2.0 ppm). It is noted here that, since ethylene units are not affected by acetalization reaction, the molar ratio (n) of ethylene units in the ethylene-vinyl alcohol copolymer is equal to the molar ratio (n) of ethylene units in a modified vinyl acetal resin obtained after acetalization reaction.

The molar ratio (1) of vinyl alcohol units, the molar ratio (m) of vinyl acetate units and the molar ratio (k) of acetalized vinyl alcohol units, all of which molar ratios are with respect to all monomer units constituting the modified vinyl acetal resin, can be calculated from the intensity ratio of methine protons derived from ethylene units, vinyl alcohol units and vinyl ester units (peak at 1.0 to 1.8 ppm) and terminal methyl protons derived from acetal units (peak at 0.8 to 1.0 ppm) as well as the molar ratio (n) of ethylene units in the ethylene-vinyl alcohol copolymer, based on a spectrum obtained by dissolving the modified vinyl acetal resin in $DMSO\text{-}d_6$ (dimethyl sulfoxide) and performing a measurement using a 400-MHz 1H-NMR analyzer with 256 integrations.

The acetalization degree of the modified vinyl acetal resin may be calculated from the above-determined molar ratio (1) of vinyl alcohol units, molar ratio (m) of vinyl acetate units and molar ratio (k) of acetalized vinyl alcohol units, using the following equation:

$$\text{Acetalization degree (mol\%)} = \{k/(k + l + m)\} \times 100.$$

As yet another method, in accordance with the method described in JIS K6728:1977, a mass ratio ($l_0$) of unacetalized vinyl alcohol units, a mass ratio ($m_0$) of vinyl acetate units and a mass ratio ($k_0$) of acetalized vinyl alcohol units are each determined by titration, and a mass ratio ($n_0$) of ethylene units is calculated by an equation: $n_0 = 1 - l_0 - m_0 - k_0$. From the thus obtained values, a molar ratio (1) of unacetalized vinyl alcohol units, a molar ratio (m) of vinyl acetate units and a molar ratio (k) of acetalized vinyl alcohol units are calculated, and the acetalization degree may be determined using the following equation: Acetalization degree (mol%) = {k/(l + m + k)} $\times$ 100.

[Method of Producing Modified Vinyl Acetal Resin]

The modified vinyl acetal resin according to the present invention can be produced by an acetalization reaction between a vinyl alcohol resin copolymerized with ethylene (hereinafter, referred to as "ethylene-vinyl alcohol copolymer") and an aldehyde in the presence of an acidic catalyst.

(Ethylene-Vinyl Alcohol Copolymer)

The ethylene-vinyl alcohol copolymer may be, for example, one which is obtained by copolymerizing ethylene and a vinyl ester-based monomer and saponifying the resulting copolymer. As a method of copolymerizing ethylene and the vinyl ester-based monomer, any conventionally known method such as solution polymerization, bulk polymerization, suspension polymerization or emulsion polymerization can be applied. As a polymerization initiator, for example, an azo-based initiator, a peroxide-based initiator or a redox-type initiator can be selected as appropriate in accordance with polymerization method. As a saponification reaction, for example, alcoholysis or hydrolysis using a conventionally known alkali catalyst or acid catalyst can be applied and, particularly, a saponification reaction using methanol as a solvent along with a caustic soda (NaOH) catalyst is convenient.

The ethylene unit content in the ethylene-vinyl alcohol copolymer is preferably 20 to 80 mol%, more preferably 29 to 62 mol%, still more preferably 35 to 50 mol%. By satisfying this range, the ethylene unit content in the above-described modified vinyl acetal resin can be adjusted to be in a preferred range.

Examples of the vinyl ester-based monomer used as a raw material of the ethylene-vinyl alcohol copolymer include vinyl formate, vinyl acetate, vinyl propionate, vinyl butyrate, vinyl isobutyrate, vinyl pivalate, vinyl versatate, vinyl caproate, vinyl caprylate, vinyl laurate, vinyl palmitate, vinyl stearate, vinyl oleate and vinyl benzoate, and the vinyl ester-based monomer is preferably vinyl acetate.

The saponification degree of the ethylene-vinyl alcohol copolymer is not particularly limited. It is preferably 95 mol% or higher, more preferably 98 mol% or higher, still more preferably 99 mol% or higher, most preferably 99.9 mol% or higher.

The vinyl alcohol unit content in the ethylene-vinyl alcohol copolymer is preferably 20 to 80 mol%, more preferably 38 to 71 mol%, still more preferably 50 to 65 mol%. By satisfying this range, the vinyl alcohol unit content in the above-described modified vinyl acetal resin can be adjusted to be in a preferred range.

The MFR of the ethylene-vinyl alcohol copolymer at 190°C with a 2.16-kg load is preferably 1 to 30 g/10 min, more preferably 2 to 20 g/10 min, still more preferably 3 to 10 g/10 min. By satisfying this range, the MFR of the below-described modified vinyl acetal resin can be adjusted to be in a preferred range.

(Acetalization Reaction)

A method of producing the modified vinyl acetal resin contained in the resin composition of the present invention is not particularly limited, and the modified vinyl acetal resin can be produced by applying any known production method. Examples thereof include: a method of adding an aldehyde to a solution of the ethylene-vinyl alcohol copolymer under an acidic condition and performing an acetalization reaction in the state of a solution or in the state of a dispersion in which the copolymer is allowed to start precipitating into particulate form in the middle of the reaction; and a method of adding an aldehyde to a dispersion of the ethylene-vinyl alcohol copolymer under an acidic condition and performing an acetalization reaction in the state of a solution in which the dispersed copolymer is allowed to start dissolving in the middle of the reaction.

A solvent used for the production of the modified vinyl acetal resin is not particularly limited, and examples thereof include water, alcohols, dimethyl sulfoxide and a mixed solvent of water and an alcohol.

As a catalyst for the acetalization reaction, a strong organic or inorganic acid is preferred. Examples thereof include p-toluenesulfonic acid, nitric acid, sulfuric acid and hydrochloric acid. These catalysts may be used singly, or in combination of two or more thereof. Particularly, an inorganic acid such as hydrochloric acid, sulfuric acid or nitric acid is preferably used because of the ease of washing after the reaction.

The aldehyde used in the acetalization reaction is not particularly limited. For example, formaldehyde, acetaldehyde, propionaldehyde, butylaldehyde, hexylaldehyde, benzaldehyde, isobutylaldehyde, 2-ethylhexylaldehyde, 2-methylbutylaldehyde, trimethylacetaldehyde, 2-methylpentylaldehyde, 2,2-dimethylbutyladehyde, 2-ethylbutylaldehyde or 3,5,5-trimethylhexylaldehyde can be used. From the viewpoint of heat resistance and optical properties, butylaldehyde, benzaldehyde or isobutylaldehyde is preferably used. The above-described aldehydes may be used singly, or in combination of two or more thereof.

A reaction product obtained after the acetalization reaction is neutralized with an alkali and subsequently washed with water, followed by removal of the solvent, whereby the intended modified vinyl acetal resin can be obtained.

The alkali used for the neutralization of the reaction product is preferably an alkali containing an alkali metal or an alkaline earth metal. Examples thereof include sodium hydroxide, potassium hydroxide, sodium carbonate, sodium hydrogen carbonate and potassium carbonate. These alkalis may be used singly, or in combination of two or more thereof.

The MFR of the modified vinyl acetal resin contained in the resin composition of the present invention at 190°C with a 2.16-kg load is preferably in the following order: 0.1 to 100 g/10 min, 1 to 50 g/10 min, 2 to 30 g/10 min and 3 to 20 g/10 min. When the MFR at 190°C with a 2.16-kg load is lower than 0.1 g/10 min, there is a tendency that a sufficient workability (fluidity) cannot be obtained in an appropriate molding temperature range at the time of molding and it is thus necessary to raise the molding temperature, as a result of which the resulting molded body is colored. When the MFR at 190°C with a 2.16-kg load is higher than 100 g/10 min, there is a tendency that a sufficient melt tension cannot be obtained in an appropriate molding temperature range at the time of molding, as a result of which problems such as deterioration of the film-forming stability and the surface state of the resulting molded body occur.

The content of the modified vinyl acetal resin in the resin composition of the present invention is preferably 80% by mass or more, more preferably 90% by mass or more, still more preferably 95% by mass or more. The content of the modified vinyl acetal resin may be 99% by mass or more.

The resin composition of the present invention may optionally contain other thermoplastic resin in addition to the modified vinyl acetal resin. The other thermoplastic resin is not particularly limited, and examples thereof include (meth) acrylic-based resins, polyvinyl butyral-based resins and ionomer-based resins.

When the resin composition contains the above-described other thermoplastic resin, the content thereof is preferably 20 parts by mass or less, more preferably 15 parts by mass or less, still more preferably 10 parts by mass or less, with respect to 100 parts by mass of the modified vinyl acetal resin. When the content of the other thermoplastic resin in the resin composition is more than 20 parts by mass, the transparency and the adhesion to a substrate such as glass or the like tend to be deteriorated.

The resin composition of the present invention may further contain, as required, additives such as a plasticizer, an antioxidant, an ultraviolet absorber, an adhesion improver, an antiblocking agent, a silane coupling agent, a pigment, a dye and a functional inorganic compound. Further, as required, the content of the plasticizer and other additives may be once reduced by extraction or washing, and the plasticizer and other additives may be added again.

When the resin composition contains the above-described additives, a total content thereof is preferably 20 parts by mass or less, more preferably 15 parts by mass or less, still more preferably 10 parts by mass or less, most preferably 5 parts by mass or less, with respect to 100 parts by mass of the modified vinyl acetal resin. When the content of the additives is more than 20 parts by mass, problems are likely to occur in that, for example, sufficient self-standing property (heat resistance) under high-temperature conditions is not obtained, and bleeding of the additives occurs in the long-term use of the resin composition as an intermediate film of a laminated glass.

Particularly, a plasticizer by its nature has a high effect of reducing the self-standing property (heat resistance) under high-temperature conditions and the water resistance; therefore, the content thereof is preferably 1 part by mass or less (inclusive of 0 part by mass), more preferably 0.5 part by mass or less (inclusive of 0 part by mass), still more preferably 0.1 part by mass or less (inclusive of 0 part by mass), with respect to 100 parts by mass of the modified vinyl acetal resin. The resin composition of the present invention has excellent moldability even when it does not contain any plasticizer (0 part by mass) or contains a plasticizer in a small amount (e.g., 1 part by mass or less).

The plasticizer to be used is not particularly limited. Examples of a plasticizer that can be used include: carboxylic acid ester-based plasticizers, such as monovalent carboxylic acid ester-based plasticizers and polyvalent carboxylic acid ester-based plasticizers; phosphoric acid ester-based plasticizers; and organic phosphorous acid ester-based plasticizer, as well as polymeric plasticizers, such as carboxylic acid polyester-based plasticizers, carbonic acid polyester-based plasticizers and polyalkylene glycol-based plasticizers; and ester compounds of a hydroxycarboxylic acid and a polyhydric alcohol, such as castor oil.

Examples of the monovalent carboxylic acid ester-based plasticizers include compounds obtained by a condensation reaction between a monovalent carboxylic acid such as butanoic acid, isobutanoic acid, pentanoic acid, hexanoic acid, 2-ethylhexanoic acid, heptanoic acid, octylic acid or lauric acid, and a polyhydric alcohol such as ethylene glycol, diethylene glycol, triethylene glycol, tetraethylene glycol, polyethylene glycol or glycerol. Specific examples of such compounds include triethylene glycol di-2-ethylhexanoate, triethylene glycol diisobutanoate, triethylene glycol di-2-hexanoate, triethylene glycol di-2-ethylbutanoate, triethylene glycol dilaurate, ethylene glycol di-2-ethylhexanoate, diethylene glycol di-2-ethylhexanoate, tetraethylene glycol di-2-ethylhexanoate, tetraethylene glycol diheptanoate, PEG#400 di-2-ethylhexanoate, triethylene glycol mono-2-ethylhexanoate and glycerol tri-2-ethylhexanoate. It is noted here that "PEG#400" refers to a polyethylene glycol having an average molecular weight of 350 to 450.

Examples of the polyvalent carboxylic acid ester-based plasticizers include compounds obtained by a condensation reaction between a polyvalent carboxylic acid such as adipic acid, succinic acid, azelaic acid, sebacic acid, phthalic acid, isophthalic acid, terephthalic acid or trimellitic acid, and an alcohol having 1 to 12 carbon atoms such as methanol, ethanol, butanol, hexanol, 2-ethylbutanol, heptanol, octanol, 2-ethylhexanol, decanol, dodecanol, butoxyethanol, butoxyethoxyethanol or benzyl alcohol. Specific examples of such compounds include dihexyl adipate, di-2-ethylhexyl adipate, diheptyl adipate, dioctyl adipate, di(butoxyethyl) adipate, di(butoxyethoxyethyl) adipate, mono(2-ethylhexyl) adipate, dibutyl phthalate, dihexyl phthalate, di(2-ethylbutyl) phthalate, dioctyl phthalate, di(2-ethylhexyl) phthalate, benzylbutyl phthalate and didodecyl phthalate.

Examples of the phosphoric acid ester-based plasticizers and the organic phosphorous acid ester-based plasticizers include compounds obtained by a condensation reaction between phosphoric acid or phosphorous acid, and an alcohol having 1 to 12 carbon atoms such as methanol, ethanol, butanol, hexanol, 2-ethyl butanol, heptanol, octanol, 2-ethyl hexanol, decanol, dodecanol, butoxyethanol, butoxyethoxyethanol or benzyl alcohol. Specific examples of such compounds include trimethyl phosphate, triethyl phosphate, tripropyl phosphate, tributyl phosphate, tri(2-ethylhexyl) phosphate, tri(butoxyethyl) phosphate and tri(2-ethylhexyl) phosphite.

The carboxylic acid polyester-based polymeric plasticizers may be, for example: carboxylic acid polyesters obtained by alternating copolymerization of a polyvalent carboxylic acid such as oxalic acid, malonic acid, succinic acid, adipic acid, suberic acid, sebacic acid, dodecanedioic acid, 1,2-cyclohexanedicarboxylic acid, 1,3-cyclohexanedicarboxylic acid or 1,4-cyclohexanedicarboxylic acid, with a polyhydric alcohol such as ethylene glycol, diethylene glycol, triethylene glycol, tetraethylene glycol, 1,2-propylene glycol, 1,3-propylene glycol, 1,2-butylene glycol, 1,3-butylene glycol, 1,4-butylene glycol, 1,2-pentanediol, 1,5-pentanediol, 2,4-pentanediol, 1,2-hexanediol, 1,6-hexanediol, 3-methyl-1,5-pentanediol, 3-methyl-2,4-pentanediol, 1,2-heptanediol, 1,7-heptanediol, 1,2-octanediol, 1,8-octanediol, 1,2-nonanediol, 1,9-nonanediol, 2-methyl-1,8-octanediol, 1,2-decanediol, 1,10-decanediol, 1,2-dodecanediol, 1,12-dodecanediol, 1,2-cyclohexanediol, 1,3-cyclohexanediol, 1,4-cyclohexanediol, 1,2-bis(hydroxymethyl)cyclohexane, 1,3-bis(hydroxymethyl)cyclohexane or 1,4-bis(hydroxymethyl)cyclohexane; or carboxylic acid polyesters obtained by ring-opening polymerization of a lactone compound such as $\varepsilon$-caprolactone. The terminal structures of these carboxylic acid polyesters may each be, for example, a hydroxy group or a carboxyl group, and the terminal hydroxy group or the terminal carboxyl group may be reacted with a monovalent carboxylic acid or a monohydric alcohol to form an ester bond.

Examples of the carbonic acid polyester-based polymeric plasticizers include carbonic acid polyesters obtained by alternating copolymerization of a polyhydric alcohol such as ethylene glycol, diethylene glycol, triethylene glycol, tetraethylene glycol, 1,2-propylene glycol, 1,3-propylene glycol, 1,2-butyleneglycol, 1,3-butyleneglycol, 1,4-butylene glycol, 1,2-pentanediol, 1,5-pentanediol, 2,4-pentanediol, 1,2-hexanediol, 1,6-hexanediol, 3-methyl-1,5-pentanediol, 3-methyl-2,4-pentanediol, 1,2-heptanediol, 1,7-heptanediol, 1,2-octanediol, 1,8-octanediol, 1,2-nonanediol, 1,9-nonanediol, 2-methyl-1,8-octanediol, 1,2-decanediol, 1,10-decanediol, 1,2-dodecanediol, 1,12-dodecanediol, 1,2-cyclohexanediol, 1,3-cyclohexanediol, 1,4-cyclohexanediol, 1,2-bis(hydroxymethyl)cyclohexane, 1,3-bis(hydroxymethyl)cyclohexane or 1,4-bis(hydroxymethyl)cyclohexane, with a carbonic acid ester such as dimethyl carbonate or diethyl carbonate, through a transesterification reaction. The terminal structures of these carbonic acid polyesters are each preferably, for example, a carbonic acid ester group or a hydroxy group.

Examples of the polyalkylene glycol-based plasticizers include polymers obtained by ring-opening polymerization of an alkylene oxide such as ethylene oxide, propylene oxide or butylene oxide, using a monohydric alcohol, a polyhydric alcohol, a monovalent carboxylic acid or a polyvalent carboxylic acid as an initiator.

Among these plasticizers, monovalent carboxylic acid ester-based plasticizers and carboxylic acid polyester-based polymeric plasticizers are preferred. Among monovalent carboxylic acid ester-based plasticizers, triethylene glycol di-2-ethyl hexanoate is particularly preferred.

In the present invention, these plasticizers may be used singly, or in combination of two or more thereof.

The resin composition of the present invention may also contain an antioxidant. Examples of the antioxidant to be used include phenolic antioxidants, phosphorus-based antioxidants and sulfur-based antioxidants, among which a phenolic antioxidant is preferred, and an alkyl-substituted phenolic antioxidant is particularly preferred.

Examples of the phenolic antioxidants include: acrylate compounds, such as 2-t-butyl-6-(3-t-butyl-2-hydroxy-5-methylbenzyl)-4-methylphenyl acrylate and 2,4-di-t-amyl-6-(1-(3,5-di-t-amyl-2-hydroxyphenyl)ethyl)phenyl acrylate; alkyl-substituted phenolic compounds, such as 2,6-di-t-butyl-4-methylphenol, 2,6-di-t-butyl-4-ethylphenol, octadecyl-3-(3,5-di-t-butyl-4-hydroxyphenyl)propionate, 2,2'-methylene-bis(4-methyl-6-t-butylphenol), 4,4'-butylidene-bis(4-methyl-6-t-butylphenol), 4,4'-butylidene-bis(6-$t$-butyl-$m$-cresol), 4,4'-thiobis(3-methyl-6-t-butylphenol), bis(3-cyclohexyl-2-hydroxy-5-methylphenyl)methane, 3,9-bis{2-(3-(3-$t$-butyl-4-hydroxy-5-methylphenyl)propionyloxy)-1,1-dimethylethyl)-2,4,8,10-tetraoxaspiro[5,5]undecane, 1,1,3-tris(2-methyl-4-hydroxy-5-t-butylphenyl)butane, 1,3,5-trimethyl-2,4,6-tris(3,5-di-t-butyl-4-hydroxybenzyl)benzene, tetrakis(methylene-3-(3',5'-di-t-butyl-4'-hydroxyphenyl)propionate)methane and triethylene glycol bis(3-(3-t-butyl-4-hydroxy-5-methylphenyl)propionate); and triazine group-containing phenolic compounds, such as 6-(4-hydroxy-3,5-di-t-butylanilino)-2,4-bis-octylthio-1,3,5-triazine, 6-(4-hydroxy-3,5-dimethylanilino)-2,4-bis-octylthio-1,3,5-triazine, 6-(4-hydroxy-3-methyl-5-t-butylanilino)-2,4-bis-octylthio-1,3,5-triazine and 2-octylthio-4,6-bis-(3,5-di-$t$-butyl-4-oxyanilino)-1,3,5-triazine.

Examples of the phosphorus-based antioxidants include: monophosphite compounds, such as triphenyl phosphite, diphenyl isodecyl phosphite, phenyl diisodecyl phosphite, tris(nonylphenyl)phosphite, tris(dinonylphenyl) phosphite, tris(2-t-butyl-4-methylphenyl)phosphite, tris(cyclohexylphenyl)phosphite, 2,2-methylene-bis(4,6-di-t-butylphenyl)octyl phosphite, 9,10-dihydro-9-oxa-10-phosphaphenanthrene-10-oxide, 10-(3,5-di-t-butyl-4-hydroxybenzyl)-9,10-dihydro-9-oxa-10-phosphaphenanthrene-10-oxide and 10-decyloxy-9,10-dihydro-9-oxa-10-phosphaphenanthrene; and diphosphite compounds, such as 4,4'-butylidene-bis(3-methyl-6-$t$-butylphenyl-di-tridecylphosphite), 4,4'-isopropylidene-bis(phenyl-di-alkyl($C_{12}$ to $C_{15}$) phosphite), 4,4'-isopropylidene-bis(diphenylmonoalkyl($C_{12}$ to $C_{15}$) phos-phite), 1,1,3-tris(2-methyl-4-di-tridecylphosphite-5-$t$-butylphenyl)butane and tetrakis(2,4-di-t-butylphenyl)-4,4'-biphenylene phosphite. Among these phosphorus-based antioxidants, monophosphite compounds are preferred.

Examples of the sulfur-based antioxidants include dilauryl 3,3'-thiodipropionate, distearyl 3,3'-thiodipropionate, laurylstearyl 3,3'-thiodipropionate, pentaerythritol-tetrakis-($\beta$-laurylthiopropionate) and 3,9-bis(2-dodecylthioethyl)-2,4,8,10-tetraoxaspiro[5.5]undecane.

These antioxidants may be used singly, or in combination of two or more thereof. The amount of the antioxidant(s) to be added is preferably 0.001 to 5 parts by mass, more preferably 0.01 to 1 part by mass, with respect to 100 parts by mass of the modified vinyl acetal resin. The antioxidant(s) may be added during the production of the resin composition of the present invention. Alternatively, as another addition method, the antioxidant(s) may be added to the resin composition at the time of molding the resin sheet of the present invention.

The resin composition of the present invention may also contain an ultraviolet absorber. Examples of the ultraviolet absorber which can be used include: benzotriazole-based ultraviolet absorbers, such as 2-(5-methyl-2-hydroxyphenyl)benzotriazole, 2-[2-hydroxy-3,5-bis($\alpha,\alpha$'-dimethylbenzyl)phenyl]-2H-benzotriazole, 2-(3,5-di-t-butyl-2-hydroxyphenyl)benzotriazole, 2-(3-t-butyl-5-methyl-2-hydroxyphenyl)-5-chlorobenzotriazole, 2-(3,5-di-*t*-butyl-5-methyl-2-hydroxyphenyl)-5-chlorobenzotriazole, 2-(3,5-di-t-amyl-2-hydroxyphenyl)benzotriazole and 2-(2'-hydroxy-5'-*t*-octylphenyl)benzotriazole; hindered amine-based ultraviolet absorbers, such as 2,2,6,6-tetramethyl-4-piperidylbenzoate, bis(2,2,6,6-tetramethyl-4-piperidyl)sebacate, bis(1,2,2,6,6-pentamethyl-4-piperidyl)-2-(3,5-dit-butyl-4-hydroxybenzyl)-2-n-butylmalonate and 4-[3-(3,5-di-t-butyl-4-hydroxyphenyl)propionyloxy]-1-{2-[3-(3,5-di-t-butyl-4-hydroxyphenyl)propionyloxy]ethyl}-2,2,6,6-tetramethylpiperidine; and benzoate-based ultraviolet absorbers, such as 2,4-di-t-butylphenyl-3,5-di-t-butyl-4-hydroxybenzoate and hexadecyl-3,5-di-*t*-butyl-4-hydroxybenzoate. The amount of the ultraviolet absorber(s) to be added is preferably 0.001 to 5 parts by mass, more preferably 0.01 to 1 part by mass, with respect to 100 parts by mass of the modified vinyl acetal resin. The above-described ultraviolet absorbers may be used in combination of two or more thereof. The ultraviolet absorber(s) may be added during the production of the resin composition of the present invention. Alternatively, as another addition method, the ultraviolet absorber(s) may be added to the modified vinyl acetal resin at the time of molding the resin sheet of the present invention.

The resin composition of the present invention may also contain an adhesion improver. As the adhesion improver, for example, any of those disclosed as anti-adhesive agents in WO 03/033583 (JP 2005-505670 A) can be used, and an alkali metal salt and/or an alkaline earth metal salt of an organic acid, particularly potassium acetate and/or magnesium acetate, can be preferably used. An optimal amount of the adhesion improver to be added varies depending on other additives to be used as well as the location where the resulting module or laminated glass is used; however, the amount of the adhesion improver is preferably adjusted such that the adhesive strength of the resulting resin sheet to glass is generally 3 to 10 in a pummel test (described in, for example, WO 03/033583), particularly 3 to 6 when a high penetration resistance is required, or 7 to 10 when a high glass shatter-proof property is required. When a high glass shatter-proof property is required, it is also useful not to add any adhesion improver.

The resin composition of the present invention may also contain a silane coupling agent. Examples of the silane coupling agent to be used include 3-glycidoxypropyltrimethoxysilane, 3-glycidoxypropyldiethoxysilane, N-(2-aminoethyl)-3-aminopropyltrimethoxysilane and *N*-(2-aminoethyl)-3-aminopropyldiethoxysilane.

These silane coupling agents may be used singly, or in combination of two or more thereof. The amount of the silane coupling agent(s) to be added is preferably 0.001 to 5 parts by mass, more preferably 0.01 to 1 part by mass, with respect to 100 parts by mass of the modified vinyl acetal resin. The silane coupling agent(s) may be added during the production of the resin composition of the present invention. Alternatively, as another addition method, the silane coupling agent(s) may be added to the resin composition at the time of molding the resin sheet of the present invention.

The MFR of the resin composition of the present invention at 190°C with a 2.16-kg load is preferably in the following order: 0.1 to 100 g/10 min, 1 to 50 g/10 min, 2 to 30 g/10 min and 3 to 20 g/10 min. When the MFR at 190°C with a 2.16-kg load is lower than 0.1 g/10 min, there is a tendency that a sufficient workability (fluidity) cannot be obtained in an appropriate molding temperature range at the time of molding and it is thus necessary to raise the molding temperature, as a result of which the resulting molded body is colored. When the MFR at 190°C with a 2.16-kg load is higher than 100 g/10 min, there is a tendency that a sufficient melt tension cannot be obtained in an appropriate molding temperature range at the time of molding, as a result of which problems such as deterioration of the film-forming stability and the surface state of the resulting molded body occur.

(Resin Sheet)

The resin sheet of the present invention is formed of the above-described resin composition, and has a thickness of preferably 0.10 to 3.0 mm. The thickness of the resin sheet is more preferably 0.40 to 2.8 mm, still more preferably 0.70 to 2.6 mm. When the resin sheet is thinner than 0.10 mm, the resin sheet tends to be unable to satisfy the penetration resistance of a laminated glass. When the resin sheet is thicker than 3.0 mm, the cost of the resin sheet itself tends to be high and the cycle time of the lamination step tends to be long. The resin sheet may be molded and used as is by itself, or two or more thereof can be molded, disposed in layers, and adjusted to have a desired thickness.

It is preferred that irregularities are formed on the surface of the resin sheet of the present invention for the purposes of inhibiting adhesion of resin sheets, and improving the deaeration in the lamination step. As a method of forming the irregularities, any conventionally known method can be adopted. Examples thereof include a method of forming a melt-fractured structure by adjusting the extrusion conditions, and a method of imparting an embossed structure to the extruded resin sheet. As the embossing depth and shape, conventionally known depth and shape may be adopted.

A method of producing the resin sheet is not particularly limited, and any known method may be adopted. Specifically, the resin composition may be molded into a sheet form by extrusion molding, press molding, blow molding, injection molding or solution casting. Particularly, a method in which the resin composition is supplied to an extruder, kneaded, melted, extruded from a die, drawn using a drawing machine, and then molded into a sheet form is preferred. The resin temperature during the extrusion is preferably 170 to 250°C, more preferably 180 to 240°C, still more preferably 190 to 230°C. An excessively high resin temperature causes decomposition of the modified vinyl acetal resin, leading to an increase in the volatile substance content. Meanwhile, an excessively low temperature also leads to an increase in the volatile substance content. In order to efficiently remove volatile substances, it is preferred that the volatile substance is removed from a vent port of the extruder by vacuuming.

The resin sheet formed of the resin composition of the present invention has a storage elastic modulus (E') of preferably 20 to 1,000 MPa, more preferably 30 to 900 MPa, still more preferably 40 to 800 MPa, at a measurement temperature of 50°C and a frequency of 1 Hz. When the storage elastic modulus (E') is in this range, the self-standing property is further improved. In the present invention, the storage elastic modulus (E') is measured by the method described below in the section of the Examples.

The penetration resistance of the resin sheet formed of the resin composition of the present invention is, in terms of penetration energy measured in the below-described falling weight impact test, preferably 11 J or more, more preferably 13 J or more, still more preferably 15 J or more. When the penetration resistance of the resin sheet is less than 11 J, the use of a laminated glass comprising the resin sheet as an intermediate film tends to be difficult due to its insufficient penetration resistance.

The haze of the resin sheet formed of the resin composition of the present invention before water absorption is preferably 2.0% or lower, more preferably 1.6% or lower, still more preferably 1.2% or lower. Since a lower haze leads to a higher transparency, a lower limit value of this haze is not particularly limited and may be, for example, 0.01% or higher. The haze before water absorption can be measured by, for example, the method described below in the section of the Examples.

The haze of the resin sheet formed of the resin composition of the present invention after water absorption is preferably 3.0% or lower, more preferably 2.5% or lower, still more preferably 2.0% or lower. Since a lower haze leads to a higher transparency after water absorption, a lower limit value of this haze is not particularly limited and may be, for example, 0.01% or higher. The haze after water absorption can be measured by, for example, the method described below in the section of the Examples.

(Intermediate Film for Laminated Glass)

The present invention includes an intermediate film for a laminated glass (hereinafter, also simply referred to as "intermediate film"), which is formed of the resin sheet of the present invention. The intermediate film for a laminated glass according to the present invention is excellent in adhesion to substrates such as glass, transparency, and self-standing property; therefore, it is particularly preferred as an intermediate film of a laminated glass for a structural material.

(Laminated Glass)

A laminated glass can be produced by inserting and laminating the resin sheet of the present invention between two or more glass plates made of an inorganic or organic glass. The glass plates to be laminated with the intermediate film for a laminated glass according to the present invention are not particularly limited. Inorganic glasses such as float glass, tempered glass, wire-reinforced glass and heat-absorbing plate glass, as well as conventionally known organic glasses made of poly(methyl methacrylate), polycarbonate or the like, can be used. The thickness of each glass plate is not particularly limited; however, it is preferably 1 to 10 mm, more preferably 2 to 6 mm.

The intermediate film used in the laminated glass of the present invention may be constituted by only a layer comprising the above-described resin composition, or may be a multilayer film including at least one such layer. The multilayer film is not particularly limited and may be, for example, a two-layer film in which the above-described layer is laminated with other layer, or a three-layer film in which other layer is arranged between two of the above-described layers. When the above-described layer or other layer are provided in a plural number, the resins or resin compositions constituting the respective layers may be the same as or different from each other.

Examples of the other layer include layers comprising a known resin. As the resin, for example, a polyethylene, a polypropylene, a polyvinyl chloride, a polystyrene, a polyurethane, a polytetrafluoroethylene, an acrylic resin, a polyamide, a polyacetal, a polycarbonate, a polyester such as polyethylene terephthalate or polybutylene terephthalate, a cyclic polyolefin, a polyphenylene sulfide, a polytetrafluoroethylene, a polysulfone, a polyether sulfone, a polyarylate, a liquid-crystal polymer or a polyimide can be used. The other layer may further contain, as required, additives such as a plasticizer, an antioxidant, an ultraviolet absorber, a light stabilizer, an antiblocking agent, a pigment, a dye, a heat-shielding material (e.g., an inorganic or organic heat-shielding material having an infrared absorbing capacity), and a functional inorganic compound.

As a lamination method for obtaining the above-described laminated glass, any known method can be adopted. Examples thereof include a method using a vacuum laminator, a method using a vacuum bag, a method using a vacuum ring and a method using a nip roll. Further, a method of introducing the resultant after temporary bonding to an autoclave may be additionally performed.

In the case of using a nip roll, for example, a method of performing first temporary bonding at a temperature of not higher than the flow start temperature of the modified vinyl acetal resin, and subsequently further performing temporary bonding under a condition close to the flow start temperature may be adopted. Specifically, for example, a method of adhesion or temporary adhesion by heating at 30 to 70°C using an infrared heater or the like, performing deaeration using a roll, further heating at 50 to 120°C, and pressure-bonding with a roll may be adopted.

The autoclave step that may be additionally performed after the temporary bonding is performed, for example, under a pressure of 1 to 1.5 MPa at a temperature of 130 to 145°C for about 2 hours, although these conditions vary depending on the thickness and the configuration of the module or the laminated glass.

The laminated glass of the present invention is preferably excellent in transparency. For example, the haze of the laminated glass when slowly cooled under the below-described conditions is preferably in the following order: 0.4% or lower, 3.5% or lower, 3.0% or lower, 2.5% or lower, and 2.0% or lower, and it is more preferably 1.6% or lower, still more preferably 1.2% or lower. Since a lower haze leads to a higher transparency after slow-cooling, a lower limit value of the haze is not particularly limited and may be, for example, 0.01% or higher. The above-described haze of the laminated glass after slow-cooling can be measured by, for example, the method described below in the section of the Examples.

The laminated glass of the present invention preferably has an excellent adhesive strength with a glass. For example, the laminated glass has a maximum shear stress of preferably 20 N/mm$^2$ or more, more preferably 22 N/mm$^2$ or more, still more preferably 25 N/mm$^2$ or more, as measured in a compression shear strength test performed by the below-described method. When the maximum shear stress is less than 20 N/mm$^2$ , the glass tends to be scattered due to the insufficient adhesive strength when broken.

As described above, the intermediate film for a laminated glass according to the present invention is excellent in transparency, strength, self-standing property under a high-temperature environment, and bonding workability in the production; therefore, it is particularly preferred as an intermediate film of a laminated glass for a structural material. In addition, the intermediate film for a laminated glass according to the present invention is suitable as, not only an intermediate film of a laminated glass for a structural material, but also as an intermediate film of a laminated glass that is used in, but not limited to, a variety of applications, including mobile bodies such as automobiles, as well as buildings and solar cells.

[Examples]

The present invention will now be described more concretely by way of Examples; however, the present invention is not limited to the below-described Examples by any means.

The evaluation methods adopted in Examples and Comparative Examples are described below.

[Ethylene Unit, Vinyl Alcohol Unit, Acetal Unit, and Acetalization Degree]

An ethylene-vinyl alcohol copolymer, which was used as a raw material of a modified vinyl acetal resin in the respective Examples and Comparative Examples, was dissolved in DMSO at 120°C, and the resultant was allowed to cool under room temperature, after which *N,N*-dimethyl-4-aminopyridine and acetic anhydride were added thereto and allowed to react with stirring for 1 hour, followed by precipitation with ion-exchanged water and acetone, washing, and then drying, whereby an ethylene-vinyl acetate copolymer was obtained. The thus obtained ethylene-vinyl acetate copolymer was dissolved in DMSO-d$_6$ and, based on a spectrum obtained by performing a measurement using a 400-MHz 1H-NMR analyzer ("ECX4000", manufactured by JEOL Ltd.) with 256 integrations, a molar ratio (n) of ethylene units in the ethylene-vinyl alcohol copolymer was calculated from the intensity ratio of methine protons derived from ethylene units and vinyl acetate units (peak at 1.1 to 1.9 ppm) and terminal methyl protons derived from vinyl acetate units (peak at 2.0 ppm). It is noted here that, since ethylene units are not affected by acetalization reaction, the molar ratio (n) of ethylene units in the ethylene-vinyl alcohol copolymer was treated the same as the molar ratio (n) of ethylene units in a modified vinyl acetal resin obtained after acetalization reaction.

A molar ratio (1) of vinyl alcohol units, a molar ratio (m) of vinyl acetate units and a molar ratio (k) of acetalized vinyl alcohol units, all of which molar ratios are with respect to all monomer units constituting the modified vinyl acetal resin, were calculated from the intensity ratio of methine protons derived from ethylene units, vinyl alcohol units and vinyl ester units (peak at 1.0 to 1.8 ppm) and terminal methyl protons derived from acetal units (peak at 0.8 to 1.0 ppm) as well as the molar ratio (n) of ethylene units in the ethylene-vinyl alcohol copolymer, based on a spectrum obtained by dissolving the modified vinyl acetal resin in DMSO-$d_6$ and performing a measurement using a 400-MHz 1H-NMR analyzer ("ECX400", manufactured by JEOL Ltd.) with 256 integrations.

The acetalization degree of the modified vinyl acetal resin was calculated from the above-determined molar ratio (1) of vinyl alcohol units, molar ratio (m) of vinyl acetate units and molar ratio (k) of acetalized vinyl alcohol units, using the following equation: Acetalization degree (mol%) = {k/(k + l + m)} $\times$ 100.

[Metal Salt Content]

The content of an alkali metal salt and/or an alkaline earth metal salt of a strong acid that is/are contained in a resin composition obtained by the below-described method was determined as follows.

After adding 6.0 ml of nitric acid to 0.1 g of the resin composition, using a microwave digester ("DISCOVER SP-D80", manufactured by CEM Corporation), the temperature was raised from an initial temperature to 210°C over a period of 4 minutes, and the temperature was maintained at 210°C for 4 minutes, followed by cooling until the pressure was reduced to 70 psi at a vessel temperature of 80°C using an air-cooling fan provided in the digester. After the cooling, the resulting sample was diluted in a 50-ml PFA volumetric flask and then filtered through a 0.45 μm-thick filtration filter, and the alkali metal or alkaline earth metal content in the resin composition was measured by high-frequency inductively-coupled plasma emission spectrometry (using "iCAP6500Duo", manufactured by Thermo Fisher Scientific, Inc.). Thereafter, the metal salt content in the resin composition was determined from the thus measured metal content and the atomic weight or the molecular weight of anion species paired with metal cations.

[MFR]

The melt flow rate (MFR) of an ethylene-vinyl alcohol copolymer used as a raw material and that of a resin composition obtained by the below-described method were measured in accordance with JIS K7210-1:2014 at 190°C with a 2.16-kg load.

[Self-Standing Property under High-Temperature Environment]

A melt-kneaded product of a resin composition obtained by the below-described method was compression-molded for 5 minutes at a pressure of 50 kgf/cm$^2$ with heating at 200°C to obtain a resin sheet having a thickness of 0.8 mm. A test piece of 40 mm in length and 5 mm in width was cut out from the thus obtained resin sheet, and the storage elastic modulus (E') was measured using a dynamic viscoelasticity analyzer (manufactured by UBM Co., Ltd.) at a measurement temperature of 50°C, a frequency of 1 Hz, and a heating rate of 3°C/min. The thus measured value was used as an index of the self-standing property of the resin sheet under a high-temperature environment.

[Penetration Resistance]

A melt-kneaded product of a resin composition obtained by the below-described method was compression-molded for 5 minutes at a pressure of 50 kgf/cm$^2$ with heating at 200°C to obtain a resin sheet having a thickness of 0.8 mm. A test piece of 60 mm in length and 60 mm in width was cut out from the thus obtained resin sheet, and a test was conducted in accordance with ASTM D3763-18 using a falling weight impact tester ("CEAST 9350", manufactured by Instron Corporation) at a measurement temperature of 23°C, a load of 2 kg, and a collision speed of 9 m/sec. The penetration energy was calculated from the area of an S-S curve in a period from the moment when the tip of the striker came into contact with the test piece (when the test force was detected) until the striker penetrated through the test piece (when the test force was back to zero).

[Film-Forming Property]

A resin composition obtained by the below-described method was made into a film using a 40 mm-diameter full-flight single-screw extruder with a 60 cm-wide coat hanger die at a barrel temperature of 200°C to produce a resin sheet having a thickness of 0.8 mm and a width of 50 cm. In this process, the film-forming stability was observed, and evaluated as "A" when the film formation was continuously performed without any problem and the resulting resin sheet had a good outer appearance, or as "B" when problems such as breakage and loosening of the resulting resin sheet occurred and the resin sheet did not have a good outer appearance.

[Transparency Before Water Absorption]

A melt-kneaded product of a resin composition obtained by the below-described method was compression-molded for 5 minutes at a pressure of 50 kgf/cm$^2$ with heating at 210°C to obtain a resin sheet having a thickness of 0.8 mm. The haze of the thus obtained resin sheet was measured in accordance with JIS K7136:2000 using a haze meter ("SH7000", manufactured by Nippon Denshoku Industries Co., Ltd.).

[Transparency After Water Absorption]

A melt-kneaded product of a resin composition obtained by the below-described method was compression-molded for 5 minutes at a pressure of 50 kgf/cm$^2$ with heating at 210°C to obtain a resin sheet having a thickness of 0.8 mm. The thus obtained resin sheet was immersed in distilled water of 23°C for 2 weeks and, thereafter, the haze of the resin sheet was measured in accordance with JIS K7136:2000 using a haze meter ("SH7000", manufactured by Nippon Denshoku Industries Co., Ltd.).

[Transparency After Slow-Cooling]

A melt-kneaded product of a resin composition obtained by the below-described method was compression-molded for 5 minutes at a pressure of 50 kgf/cm$^2$ with heating at 210°C to obtain a resin sheet having a thickness of 0.8 mm. The thus obtained resin sheet was interposed between two float glass sheets of 2.7 mm in thickness, and the resultant was pressed for 5 minutes at 30 kPa using a vacuum laminator ("1522N", manufactured by Nisshinbo Mechatronics Inc.) inside of which was vacuumed for 1 minute at 100°C, while maintaining the vacuum degree and the temperature, to obtain a temporarily bonded body. This temporarily bonded body was put into an autoclave, heated to 140°C, and then slowly cooled to 23°C at a rate of 0.1°C/min. After this slow-cooling operation, the haze of the resulting laminated glass was measured in accordance with JIS K7136:2000 using a haze meter ("SH7000", manufactured by Nippon Denshoku Industries Co., Ltd.).

[Glass Adhesion]

A melt-kneaded product of a resin composition obtained by the below-described method was compression-molded for 5 minutes at a pressure of 50 kgf/cm$^2$ with heating at 210°C to obtain a resin sheet having a thickness of 0.8 mm. The thus obtained resin sheet was interposed between two float glass sheets of 2.7 mm in thickness, and the resultant was pressed for 5 minutes at 30 kPa using a vacuum laminator ("1522N", manufactured by Nisshinbo Mechatronics Inc.) inside of which was vacuumed for 1 minute at 100°C, while maintaining the vacuum degree and the temperature, to obtain a temporarily bonded body. This temporarily bonded body was put into an autoclave, and treated for 30 minutes at 140°C and 1.2 MPa to obtain a laminated glass. The thus obtained laminated glass was cut into a size of 25 mm $\times$ 25 mm to obtain a test sample. This test sample was evaluated by the compression shear strength test described in WO 1999/058334. The maximum shear stress measured at the time of delamination of the laminated glass was used as an index of the glass adhesion. An evaluation of "A" was given when the maximum shear stress was 25 N/mm$^2$ or more, or an evaluation of "B" was given when the maximum shear stress was less than 25 N/mm$^2$.

[Example 1]

In a mixed solvent of 500 parts by mass of methanol and 50 parts by mass of ion-exchanged water, 100 parts by mass of chips of an ethylene-vinyl alcohol copolymer, which was synthesized in accordance with the method described in JP 2016-28139 A and had an ethylene unit content of 44 mol%, a saponification degree of 99%, and an MFR of 5.5 g/10 min, was dispersed. Subsequently, 40 parts by mass of 1M hydrochloric acid was added, and the temperature of the resulting dispersion was raised to 60°C with stirring to completely dissolve the chips. Then, with the ethylene-vinyl alcohol copolymer being in the state of a homogenous solution, 16.7 parts by mass of isobutylaldehyde was added thereto and dispersed, after which the temperature was maintained at 60°C to perform acetalization reaction. After maintaining the temperature for 3 hours from the start of the reaction, 6.4 parts by mass of sodium carbonate was added to terminate the reaction, whereby a reaction solution containing a modified vinyl acetal resin was obtained.

To the reaction solution after neutralization, 500 parts by mass of methanol was added, and then, 2,000 parts by mass of ion-exchanged water was added dropwise to precipitate the resin. The thus precipitated resin was filtered and then dispersed in ion-exchanged water to be washed with stirring at 23°C for 15 minutes, followed by filtration. This water-washing and filtration operation was repeated two more times. The washing tasks from the precipitation to the water-washing and filtration was defined as one set. Subsequently, the resin was dissolved in 1,000 parts by mass of methanol, and one set of the washing tasks was performed again. Thereafter, the resultant was vacuum-dried at 60°C for 8 hours to obtain a resin composition. The modified vinyl acetal resin contained in the thus obtained resin composition had an ethylene unit content of 44 mol% and an acetalization degree of 30 mol%, and the NaCl content in the resin composition was 0.0120 part by mass with respect to 100 parts by mass of the modified vinyl acetal resin.

The resin composition obtained above was melt-kneaded for 3 minutes using LABO-PLASTOMILL ("4M150", manufactured by Toyo Seiki Seisaku-sho, Ltd.) at a chamber temperature of 200°C and a rotation speed of 100 rpm, and the resulting content in the chamber was taken out and cooled to obtain a melt-kneaded product. Using the thus obtained melt-kneaded product, various physical properties were evaluated. The results thereof are shown in Table 1.

[Example 2]

A resin composition was obtained in the same manner as in Example 1, except that the washing conditions were changed as shown in Table 2. The thus obtained resin composition was melt-kneaded in the same manner as in Example 1 to obtain a melt-kneaded product. Using the thus obtained melt-kneaded product, various physical properties were evaluated. The results thereof are shown in Table 1.

[Example 3]

In 315 parts by mass of methanol, 100 parts by mass of chips of an ethylene-vinyl alcohol copolymer, which was synthesized in accordance with the method described in JP 2016-28139 A and had an ethylene unit content of 48 mol%, a saponification degree of 99%, and an MFR of 6.4 g/10 min, was dispersed. The temperature of the resulting solution was raised to 60°C with stirring and, subsequently, 40 parts by mass of 1M hydrochloric acid and then 6.5 parts by mass of n-butylaldehyde were added and dispersed, after which the temperature was maintained at 60°C to perform acetalization reaction. The chips were dissolved with the progress of the reaction, yielding a homogeneous solution. After maintaining the temperature for 36 hours from the start of the reaction, 6.4 parts by mass of sodium hydrogen carbonate was added to terminate the reaction, whereby a modified vinyl acetal resin was obtained. To the reaction solution after neutralization, 500 parts by mass of methanol was added to homogenize the resulting mixture, and then, 2,000 parts by mass of ion-exchanged water was added dropwise to precipitate the resin. The thus precipitated resin was filtered and then dispersed in ion-exchanged water to be washed with stirring at 23°C for 15 minutes, followed by filtration. This water-washing and filtration operation was repeated two more times. Thereafter, the resultant was vacuum-dried at 60°C for 8 hours to obtain a resin composition. The modified vinyl acetal resin contained in the thus obtained resin composition had an ethylene unit content of 48 mol% and an acetalization degree of 13 mol%, and the NaCl content in the resin composition was 0.0335 part by mass with respect to 100 parts by mass of the modified vinyl acetal resin.

The resin composition obtained above was melt-kneaded in the same manner as in Example 1 to obtain a melt-kneaded product. Using the thus obtained melt-kneaded product, various physical properties were evaluated. The results thereof are shown in Table 1.

[Example 4]

A resin composition was obtained in the same manner as in Example 3, except that the ethylene unit content and the MFR of the ethylene-vinyl alcohol copolymer used, and the amount of added aldehyde were changed as shown in Table 1. The thus obtained resin composition was melt-kneaded in the same manner as in Example 1 to obtain a melt-kneaded product. Using the thus obtained melt-kneaded product, various physical properties were evaluated. The results thereof are shown in Table 1.

[Examples 5 to 7]

A resin composition was obtained in the same manner as in Example 1, except that the type and the amount of added aldehyde, the type of acid, the amount of added sodium carbonate, the reaction time, and the washing conditions were shown in Tables 1 and 2. The thus obtained resin composition was melt-kneaded in the same manner as in Example 1 to obtain a melt-kneaded product. Using the thus obtained melt-kneaded product, various physical properties were evaluated. The results thereof are shown in Table 1.

[Table 1]

| | | Example | | | | | | |
|---|---|---|---|---|---|---|---|---|
| | | 1 | 2 | 3 | 4 | 5 | 6 | 7 |
| Ethylene-vinyl alcohol copolymer | Ethylene unit (mol%) | 44 | 44 | 48 | 27 | 44 | 44 | 44 |
| | Vinyl alcohol unit (mol%) | 56 | 56 | 52 | 73 | 56 | 56 | 56 |
| | MFR (g/10 min) | 5.5 | 5.5 | 6.4 | 1.6 | 5.5 | 5.5 | 5.5 |
| Reaction conditions | Raw material resin (parts by mass) | 100 | 100 | 100 | 100 | 100 | 100 | 100 |
| | 1M hydrochloric acid (parts by mass) | 40 | 40 | 40 | 40 | none | none | 40 |
| | 1M nitric acid (parts by mass) | none | none | none | none | 40 | none | none |
| | 1M sulfuric acid (parts by mass) | none | none | none | none | none | 40 | . none |
| | n-butylaldehyde (parts by mass) | none | none | 6.5 | 15.4 | 16.7 | 16.7 | none |
| | Isobutylaldehyde parts by mass) | 16.7 | 16.7 | none | none | none | none | 16.7 |
| | Sodium carbonate (parts by mass) | 6.4 | 6.4 | 6.4 | 6.4 | 6.4 | 12.8 | 6.4 |
| | Reaction time (hr) | 3 | 3 | 36 | 36 | 2 | 4 | 3 |
| Modified vinyl acetal resin | Acetalization degree (mol%/PVA unit) | 30 | 30 | 13 | 22 | 29 | 30 | 30 |
| | Ethylene unit (mol%) | 44 | 44 | 48 | 27 | 44 | 44 | 44 |
| | Vinyl alcohol unit (mol%) | 39 | 39 | 45 | 57 | 40 | 39 | 39 |
| Resin composition | Modified vinyl acetal resin (parts by mass) | 100 | 100 | 100 | 100 | 100 | 100 | 100 |
| | Type of metal salt | NaCl | NaCl | NaCl | NaCl | NaNO$_3$ | Na$_2$SO$_4$ | NaCl |
| | Metal salt content (parts by mass) | 0.012 | 0.055 | 0.0335 | 0.0418 | 0.0257 | 0.0449 | 0.003 |
| | MFR (g/10 min) | 10 | 10 | 6 | 27 | 11 | 9 | 10 |
| Resin sheet | Storage elastic modulus (MPa) at 50°C | 132 | 110 | 110 | 950 | 147 | 125 | 132 |
| | Penetration energy (J) | 18 | 17 | 16 | 11 | 17 | 16 | 18 |
| | Film-forming property | A | A | A | A | A | A | A |
| | Haze before water absorption (%) | 1.3 | 1.1 | 1 | 1.3 | 1.2 | 1.5 | 0.9 |
| | Haze after water absorption (%) | 2.9 | 2.6 | 1.7 | 2 | 2.1 | 2.9 | 1.3 |
| Laminated glass | Haze after slow-cooling (%) | 3.5 | 1.1 | 1.1 | 1.6 | 1.3 | 1.7 | 3.8 |
| | Maximum shear stress (N/mm$^2$) | A | A | A | A | A | A | A |

[Table 2]

| | Example | | | | | | |
|---|---|---|---|---|---|---|---|
| | 1 | 2 | 3 | 4 | 5 | 6 | 7 |
| Step (1): dissolution of resin in methanol | performed | performed | performed | performed | performed | performed | performed |
| Step (2): precipitation | 23°C | 23°C | 23°C | 23°C | 23°C | 23°C | 23°C |
| | 15 min | 15 min | 15 min | 15 min | 15 min | 15 min | 15 min |
| Step (3): filtration | performed | performed | performed | performed | performed | performed | performed |
| Step (4): washing with water | 23°C | 40°C | 23°C | 23°C | 23°C | 23°C | 40°C |
| | 15 min | 15 min | 15 min | 15 min | 15 min | 15 min | 15 min |
| Step (5): filtration | performed | performed | performed | performed | performed | performed | performed |
| Step (6): washing with water | 23°C | 40°C | 23°C | 23°C | 23°C | 23°C | 40°C |
| | 15 min | 15 min | 15 min | 15 min | 15 min | 15 min | 15 min |
| Step (7): filtration | performed | performed | performed | performed | performed | performed | performed |
| Step (8): washing with water | 23°C | 40°C | 23°C | 23°C | 23°C | 23°C | 40°C |
| | 15 min | 15 min | 15 min | 15 min | 15 min | 15 min | 15 min |
| Step (9): filtration | performed | performed | performed | performed | performed | performed | performed |
| Step (10): repetition | Steps (1) to (9) were performed | | | | | | Steps (1) to (9) were performed |

[Comparative Example 1]

A resin composition was obtained in the same manner as in Example 1, except that the washing conditions were changed as shown in Table 4. The thus obtained resin composition was melt-kneaded in the same manner as in Example 1 to obtain a melt-kneaded product. Using the thus obtained melt-kneaded product, various physical properties were evaluated. The results thereof are shown in Table 3.

[Comparative Example 2]

A resin composition was obtained in the same manner as in Example 3, except that the ethylene unit content and the MFR of the ethylene-vinyl alcohol copolymer used, and the type of aldehyde were changed as shown in Table 3. The thus obtained resin composition was melt-kneaded in the same manner as in Example 1 to obtain a melt-kneaded product. Using the thus obtained melt-kneaded product, various physical properties were evaluated. The results thereof are shown in Table 3.

[Comparative Example 3]

A resin composition was obtained in the same manner as in Example 3, except that changes were made as shown in Table 3 referring to the ethylene unit of the ethylene-vinyl alcohol copolymer and the amount of added n-butylaldehyde that are described in Example 1 of JP 2011-57737 A. A melt-kneaded product was obtained in the same manner as in Example 1, except that 30 parts by mass of triethylene glycol di-2-ethyl hexanoate was added as a plasticizer with respect to 100 parts by mass of the modified vinyl acetal resin contained in the thus obtained resin composition. Using the thus obtained melt-kneaded product, various physical properties were evaluated. The results thereof are shown in Table 3.

[Comparative Example 4]

A resin composition was obtained in the same manner as in Example 1, except that the type of aldehyde, the type of acid, and the washing conditions were changed as shown in Tables 3 and 4. The thus obtained resin composition was melt-kneaded in the same manner as in Example 1 to obtain a melt-kneaded product. Using the thus obtained melt-kneaded product, various physical properties were evaluated. The results thereof are shown in Table 3.

[Table 3]

| | | Comparative Example | | | |
|---|---|---|---|---|---|
| | | 1 | 2 | 3 | 4 |
| Ethylene-vinyl alcohol copolymer | Ethylene unit (mol%) | 44 | 44 | 15 | 44 |
| | Vinyl alcohol unit (mol%) | 56 | 56 | 85 | 56 |
| | MFR (g/10 min) | 5.5 | 5.5 | 1.5 | 5.5 |
| Reaction conditions | Raw material resin (parts by mass) | 100 | 100 | 100 | 100 |
| | 1M hydrochloric acid (parts by mass) | 40 | 40 | 40 | none |
| | 1M nitric acid (parts by mass) | none | none | none | 40 |
| | $n$-butylaldehyde (parts by mass) | none | none | 60 | 16.7 |
| | Isobutylaldehyde (parts by mass) | 16.7 | 16.7 | none | none |
| | Sodium carbonate (parts by mass) | 6.4 | 6.4 | 6.4 | 6.4 |
| | Reaction time (hr) | 3 | 8 | 8 | 3 |
| Modified vinyl acetal resin | Acetalization degree (mol%/PVA unit) | 30 | 59 | 73 | 31 |
| | Ethylene unit (mol%) | 44 | 44 | 15 | 44 |
| | Vinyl alcohol unit (mol%) | 39 | 23 | 23 | 39 |
| Resin composition | Modified vinyl acetal resin (parts by mass) | 100 | 100 | 100 | 100 |
| | Type of metal salt | NaCl | NaCl | NaCl | CH$_3$COONa |
| | Metal salt content (parts by mass) | 0.0003 | 0.065 | 0.0457 | 0.0105 |
| | Plasticizer (parts by mass) | none | none | 30 | none |
| | MFR (g/10 min) | 10 | 45 | 52 | 9 |
| Resin sheet | Storage elastic modulus (MPa) at 50°C | 145 | 7 | 2 | 87 |
| | Penetration energy (J) | 15 | 11 | 9 | 14 |
| | Film-forming property | A | A | A | A |
| | Haze before water absorption (%) | 4.3 | 0.9 | 1.2 | 1.4 |
| | Haze after water absorption (%) | 5.2 | 94.8 | 92.9 | 4.1 |
| Laminated glass | Haze after slow-cooling (%) | 4.5 | 1 | 1.5 | 1.5 |
| | Maximum shear stress (N/mm$^2$) | A | A | B | B |

[Table 4]

| | Comparative Example | | | |
|---|---|---|---|---|
| | 1 | 2 | 3 | 4 |
| Step (1): dissolution of resin in methanol | performed | performed | performed | performed |

(continued)

| | Comparative Example | | | |
|---|---|---|---|---|
| | 1 | 2 | 3 | 4 |
| Step (2): precipitation | 23°C | 23°C | 23°C | 23°C |
| | 15 min | 15 min | 15 **min** | 15 min |
| Step (3): filtration | performed | performed | performed | performed |
| Step (4): washing with water | 23°C | 23°C | 23°C | 23°C |
| | 15 min | 15 min | 15 min | 15 min |
| Step (5): filtration | performed | performed | performed | performed |
| Step (6): washing with water | 23°C | 23°C | 23°C | 23°C |
| | 15 min | 15 min | 15 min | 15 min |
| Step (7): filtration | performed | performed | performed | performed |
| Step (8): washing with water | 23°C | 23°C | 23°C | 23°C |
| | 15 min | 15 min | 15 min | 15 min |
| Step (9): filtration | performed | performed | performed | performed |
| Step (10): repetition | Steps (1) to (9) were performed | | | |
| Step (11): repetition | Steps (1) to (9) were performed | | | |

It is seen that the resin compositions of Examples 1 to 7 contained an alkali metal salt of a strong acid in a range of 0.0005 to 0.06 part by mass and, therefore, exhibited transparency, heat resistance, film-forming property, and water resistance in a well-balanced manner, and were particularly excellent in transparency.

On the other hand, it is seen that, due to a low content of an alkali metal salt of a strong acid, the resin composition of Comparative Example 1 had a high crystallinity of the modified vinyl acetal resin contained therein and was poor in transparency. It is seen that the resin composition of Comparative Example 2 was poor in both water resistance and haze after water absorption due to a high content of an alkali metal salt of a strong acid. The resin composition of Comparative Example 3 had a poor penetration resistance due to a low ethylene content. It is also seen that the resin composition of Comparative Example 4 was poor in adhesion to glass, probably due to the inclusion of sodium acetate.

[Industrial Applicability]

By using the resin composition of the present invention, an intermediate film for a laminated glass, which is excellent in transparency, strength, self-standing property under a high-temperature environment, and bonding workability in the production, can be obtained. The intermediate film for a laminated glass is particularly useful as an intermediate film of a laminated glass for a structural material. In addition, the intermediate film can be suitably used not only as an intermediate film of a laminated glass for a structural material, but also as an intermediate film for a laminated glass in a variety of applications, including mobile bodies such as automobiles, as well as buildings and solar cells. Therefore, the resin composition of the present invention is useful for the production of an intermediate film for a laminated glass in a variety of applications.

**Claims**

1.   A resin composition, comprising:

a modified vinyl acetal resin which comprises 20 to 80 mol% of ethylene units and 4 to 76 mol% of vinyl alcohol units based on all monomer units constituting the resin, and has an acetalization degree of 5 to 80 mol%; and an alkali metal salt and/or an alkaline earth metal salt of a strong acid, wherein the total content of the alkali metal salt and/or the alkaline earth metal salt of the strong acid is 0.0005 to 0.06 part by mass with respect to 100 parts by mass of the modified vinyl acetal resin, wherein the alkali metal salt and/or the alkaline earth metal salt of a strong acid is selected from sodium chloride, sodium nitrate, sodium sulfate, potassium chloride, potassium nitrate, potassium sulfate, magnesium chloride, magnesium nitrate, magnesium sulfate, calcium chloride, calcium nitrate, calcium sulfate, and a combination of two or more thereof.

2. The resin composition according to claim 1, comprising the modified vinyl acetal resin in an amount of 80% by mass or more.

3. The resin composition according to claim 1 or 2, wherein the content of a plasticizer is an amount of 1 part by mass or less with respect to 100 parts by mass of the modified vinyl acetal resin.

4. A resin sheet, comprising the resin composition according to any one of claims 1 to 3, and having a thickness of 0.10 to 3.0 mm.

5. An intermediate film for a laminated glass, comprising the resin sheet according to claim 4

6. A laminated glass, comprising:

   two glass plates; and
   the intermediate film for a laminated glass according to claim 5, which is arranged between the two glass plates.

**Patentansprüche**

1. Harzzusammensetzung, umfassend:

   ein modifiziertes Vinylacetalharz, welches 20 bis 80 Mol-% Ethyleneinheiten und 4 bis 76 Mol-% Vinylalkoholeinheiten bezogen auf alle das Harz ausmachenden Monomereinheiten umfasst und einen Acetalisierungsgrad von 5 bis 80 Mol-% aufweist, und
   ein Alkalimetallsalz und/oder ein Erdalkalimetallsalz einer starken Säure,
   wobei der Gesamtgehalt des Alkalimetallsalzes und/oder des Erdalkalimetallsalzes der starken Säure 0,0005 bis 0,06 Massenanteile in Bezug auf 100 Massenanteile des modifizierten Vinylacetalharzes beträgt,
   wobei das Alkalimetallsalz und/oder das Erdalkalimetallsalz einer starken Säure ausgewählt ist aus Natriumchlorid, Natriumnitrat, Natriumsulfat, Kaliumchlorid, Kaliumnitrat, Kaliumsulfat, Magnesiumchlorid, Magnesiumnitrat, Magnesiumsulfat, Calciumchlorid, Calciumnitrat, Calciumsulfat und einer Kombination von zwei oder mehreren davon.

2. Harzzusammensetzung nach Anspruch 1, umfassend das modifizierte Vinylacetalharz in einer Menge von 80 Massen-% oder mehr.

3. Harzzusammensetzung nach Anspruch 1 oder 2, wobei der Gehalt eines Weichmachers eine Menge von 1 Massenanteil oder weniger in Bezug auf 100 Massenanteile des modifizierten Vinylacetalharzes beträgt.

4. Harzfolie, umfassend die Harzzusammensetzung nach einem der Ansprüche 1 bis 3 und aufweisend eine Dicke von 0,10 bis 3,0 mm.

5. Zwischenfolie für ein Verbundglas, umfassend die Harzfolie nach Anspruch 4.

6. Verbundglas, umfassend:

   zwei Glasplatten; und
   die Zwischenfolie für ein Verbundglas nach Anspruch 5, welche zwischen den beiden Glasplatten angeordnet ist.

**Revendications**

1. Composition de résine, comprenant :

   une résine d'acétal de vinyle modifiée qui comprend 20 à 80 % en mole d'unités d'éthylène et 4 à 76 % en mole d'unités d'alcool vinylique basées sur l'ensemble des unités monomères constituant la résine, et a un degré d'acétalisation de 5 à 80 % en mole ; et
un sel de métal alcalin et/ou un sel de métal alcalino-terreux d'un acide fort,
dans laquelle la teneur totale en le sel de métal alcalin et/ou le sel de métal alcalino-terreux de l'acide fort est de 0,0005 à 0,06 partie en masse par rapport à 100 parties en masse de la résine d'acétal de vinyle modifiée,
dans laquelle le sel de métal alcalin et/ou le sel de métal alcalino-terreux d'un acide fort est sélectionné parmi le chlorure de sodium, nitrate de sodium, sulfate de sodium, chlorure de potassium, nitrate de potassium, sulfate de potassium, chlorure de magnésium, nitrate de magnésium, sulfate de magnésium, chlorure de calcium, nitrate de calcium, sulfate de calcium ou une combinaison de deux ou plus de ceux-ci.

2. Composition de résine selon la revendication 1, comprenant la résine d'acétal de vinyle modifiée en une quantité de 80 % en masse ou plus.

3. Composition de résine selon la revendication 1 ou 2, dans laquelle la teneur en un plastifiant est une quantité de 1 partie en masse ou moins par rapport à 100 parties en masse de la résine d'acétal de vinyle modifiée.

4. Feuille de résine, comprenant la composition de résine selon l'une quelconque des revendications 1 à 3, et ayant une épaisseur de 0,10 à 3,0 mm.

5. Film intermédiaire pour un verre feuilleté, comprenant la feuille de résine selon la revendication 4.

6. Verre feuilleté, comprenant :

deux plaques de verre ; et
le film intermédiaire pour un verre feuilleté selon la revendication 5, qui est agencé entre les deux plaques de verre.

[FIG. 1]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H930846 A
- JP 63079741 A
- JP 2004068013 A
- JP 2012107201 A
- JP 2013237727 A

- WO 03033583 A
- JP 2005505670 A
- WO 1999058334 A
- JP 2016028139 A
- JP 2011057737 A